(19) Europäisches Patentamt
European Patent Office
Office européen des brevets

(11) **EP 3 201 693 B1**

(12) **FASCICULE DE BREVET EUROPEEN**

(45) Date de publication et mention
de la délivrance du brevet:
**25.12.2019 Bulletin 2019/52**

(51) Int Cl.:
***G04G 7/00*** *(2006.01)*    ***G06F 1/12*** *(2006.01)*

(21) Numéro de dépôt: **15788146.7**

(86) Numéro de dépôt international:
**PCT/FR2015/052668**

(22) Date de dépôt: **05.10.2015**

(87) Numéro de publication internationale:
**WO 2016/051118 (07.04.2016 Gazette 2016/14)**

(54) **SYSTEME ET PROCEDE DE SYNCHRONISATION POUR HORODATER DES MESURES D'UN CAPTEUR EMBARQUE RELATIVEMENT A UNE HORLOGE DE REFERENCE**

SYNCHRONISIERUNGSSYSTEM UND -VERFAHREN FÜR MESSZEITSTEMPEL VON EINEM ON-BOARDSENSOR IN BEZUG AUF EINEN REFERENZTAKT

SYNCHRONISATION SYSTEM AND METHOD FOR TIMESTAMPING MEASUREMENTS FROM AN ON-BOARD SENSOR RELATIVE TO A REFERENCE CLOCK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2014 FR 1459496**

(43) Date de publication de la demande:
**09.08.2017 Bulletin 2017/32**

(73) Titulaire: **Avantix**
**13794 Aix-en-Provence (FR)**

(72) Inventeurs:
• **SABATIER, Stéphane**
**F-13580 La Fare les Oliviers (FR)**
• **TENEZE, Bernard**
**F-13640 Roque d'Antheron (FR)**

(74) Mandataire: **Cabinet Camus Lebkiri**
**25 rue de Maubeuge**
**75009 Paris (FR)**

(56) Documents cités:
**US-A1- 2012 020 445**

• **STEVEN W ARMS ET AL: "Flight Testing of Wireless Sensing Networks for Rotorcraft Structural Health and Usage Management Systems", PROCEEDINGS OF THE 7TH DSTO INTERNATIONAL CONFERENCE ON HEALTH & USAGE MONITORING (HUMS 2011), 3 mars 2011 (2011-03-03), pages 1-14, XP055197677,**
• **DEL RIO JOAQUIN ET AL: "Smart IEEE-1588 GPS Clock Emulator for Cabled Ocean Senors", IEEE JOURNAL OF OCEANIC ENGINEERING, IEEE SERVICE CENTER, PISCATAWAY, NJ, US, vol. 39, no. 2, 1 avril 2014 (2014-04-01), pages 269-275, XP011545239, ISSN: 0364-9059, DOI: 10.1109/JOE.2013.2265513 [extrait le 2014-04-10]**

**Description**

**DOMAINE TECHNIQUE DE L'INVENTION**

La présente invention se rapporte au domaine technique des capteurs embarqués, notamment embarqués dans un avion d'essai, adaptés pour réaliser et dater des mesures. L'invention concerne plus particulièrement des systèmes de synchronisation de différents capteurs embarqués, permettant de dater différentes mesures selon une base de temps commune.

**ARRIERE PLAN TECHNOLOGIQUE DE L'INVENTION**

Un avion d'essai est classiquement équipé de quelques milliers capteurs, adaptés pour recueillir un ensemble de données permettant de vérifier l'adéquation entre des simulations de vol et des performances réelles. Ces capteurs sont notamment des capteurs de pression, de température, d'accélération, des jauges de contraintes, etc. Les capteurs sont classiquement répartis dans la cabine, le nez, les ailes, le moteur et l'empennage de l'avion.

Afin de disposer de mesures exploitables, les capteurs nécessitent d'être synchrones : il est essentiel qu'ils datent les mesures qu'ils réalisent selon une base de temps commune. Ainsi, chaque capteur est classiquement connecté par câblage à une unité principale comportant une horloge de référence. La base de temps commune, basée sur l'horloge de référence, est alors transmise par voie filaire. Or, en raison de la grande quantité de capteurs et de leur répartition dans l'avion, un tel câblage est lourd, encombrant, et complexe.

On connait dans l'état de la technique notamment le document US 2012/020445, et l'article "Flight Testing of Wireless Sensing Networks for Rotorcraft Structural Health and Usage Management Systems - STEVEN W ARMS et AL.

**DESCRIPTION GENERALE DE L'INVENTION**

L'objet de l'invention offre une solution au problème évoqué précédemment, en proposant un système de synchronisation de capteurs avec une horloge de référence, présentant une masse, un encombrement et une complexité moindre.

Selon un premier aspect, l'invention concerne donc un système de synchronisation pour dater des mesures d'un capteur relativement à une horloge de référence, comportant :

- une unité principale comprenant :

  ○ un émulateur d'une constellation artificielle de satellites GPS ayant pour base temporelle une horloge de référence, l'émulateur comprenant des moyens de génération pour générer un signal principal sur une fréquence GPS, simulant l'ensemble des émissions de la constellation
  ○ des moyens de traitement aptes à délivrer un signal radio à partir du signal principal, les moyens de traitement comprenant des moyens de transposition de fréquence aptes à transposer la fréquence GPS du signal principal vers une fréquence radio
  ○ des moyens d'envoi du signal radio

- une unité secondaire positionnée à une distance de l'unité principale, comprenant :

  ○ des moyens de réception du signal radio
  ○ des moyens de changement de fréquence aptes à transposer la fréquence radio du signal radio vers la fréquence GPS, de sorte à délivrer un signal exploitable par un récepteur GPS
  ○ un récepteur GPS comprenant :

    une horloge locale
    des moyens d'asservissements aptes à décoder le signal exploitable et à synchroniser l'horloge locale sur l'horloge de référence au moyen desdites informations décodées et de la distance entre l'unité principale et l'unité secondaire

  ○ un capteur relié au récepteur GPS, apte à réaliser des mesures et dater lesdites mesures relativement à l'horloge locale du récepteur GPS.

On note qu'un émulateur de constellation artificielle de satellites GPS, plus couramment appelé simulateur de signaux GPS, est un dispositif connu, classiquement utilisé pour tester des récepteurs GPS. A partir de données de configuration d'une constellation de satellites GPS, telles que les coordonnées spatiales des satellites, leurs orbites ou encore des informations relatives à leur horloge, l'émulateur est apte à fabriquer un signal, appelé signal principal, représentant l'ensemble des émissions des satellites de la constellation sur une fréquence GPS. Ce signal principal serait celui qu'un récepteur GPS recevrait de la constellation dans un cadre réel. L'utilisation classique de l'émulateur est donc détournée dans le cadre de l'invention.

Or le signal principal ne doit pas être transmis tel quel aux moyens de réception de l'unité secondaire. En effet, la fréquence du signal principal doit être modifiée car les signaux GPS réels émis par les satellites de la constellation GPS réelle ne doivent pas être brouillés ; c'est le rôle des moyens de transposition de fréquence. L'opération inverse de changement de fréquence est réalisée par les moyens de changement de fréquence de l'unité secondaire afin de fournir au récepteur GPS un signal exploitable, c'est-à-dire un signal à une fréquence GPS.

Le récepteur GPS décode ensuite le signal exploitable pour en extraire des informations de synchronisation avec l'horloge de référence, et des informations sur les orbites des satellites artificiels. A partir de ces données décodées, le récepteur GPS est apte à asservir son horloge locale sur l'horloge de référence. On note que pour réaliser cet asservissement, le récepteur GPS doit également disposer de la distance entre l'unité principale et l'unité secondaire. En effet, cette distance est responsable d'un délai de transmission du signal radio, à prendre en compte pour synchroniser correctement l'horloge locale du récepteur GPS. La distance entre l'unité principale et l'unité secondaire est par exemple donnée en paramètre au récepteur GPS lors de son installation dans l'avion, ou encore déterminée par le récepteur GPS au moyen de méthodes d'apprentissage.

Grâce au système de synchronisation selon l'invention, la synchronisation s'effectue par liaison radio, ce qui permet l'affranchissement de la mise en place d'un câblage entre le capteur et l'horloge de référence. Les mesures réalisées par le capteur sont datés sur la base de l'horloge locale du récepteur GPS, elle-même synchronisée avec l'horloge de référence. On note que l'horloge de référence est par exemple une horloge de l'avion utilisée pour d'autres applications, ou alors une horloge comprise dans l'émulateur.

Dans un mode de réalisation préféré, le système de synchronisation comporte une pluralité d'unités secondaires, avantageusement autant que de capteurs à synchroniser. Tous les capteurs sont alors asservis sur la même horloge de référence, et datent donc leurs mesures dans une même base temporelle.

Le système de synchronisation selon l'invention peut présenter une ou plusieurs caractéristiques complémentaires parmi les suivantes, considérées individuellement ou selon toutes les combinaisons techniquement possibles.

Dans un mode de réalisation préféré, les moyens de génération de l'émulateur comportent :

- une pluralité de canaux, chacun associé à un satellite de la constellation
- des moyens de génération de signaux aptes à générer, sur chaque canal, des signaux simulant des émissions du satellite associé au canal, les signaux étant émis sur la fréquence GPS
- des moyens de superposition de signaux, aptes à superposer les signaux générés sur les canaux de l'émulateur, de sorte à produire un signal principal.

Dans un mode de réalisation non limitatif, le système de synchronisation comporte des moyens d'estimation de distance aptes à estimer la distance entre l'unité principale et l'unité secondaire, et à fournir ladite estimation au récepteur GPS. La distance n'a alors pas à être paramétrée manuellement dans le récepteur GPS.

Dans un mode de réalisation non limitatif, les moyens de traitement comportent des moyens d'amplification aptes à amplifier le signal principal. Ainsi, le signal radio émis est d'amplitude optimale pour sa réception par les moyens de réception de l'unité secondaire.

Dans un mode de réalisation non limitatif, la fréquence radio est comprise entre 407 et 825 MHz. En effet, la bande de fréquences de 407 à 825 MHz n'est généralement pas utilisée dans les avions. Le signal radio ne risque donc pas d'interférer avec d'autres signaux (par exemple des signaux utilisés pour la communication avec les stations de contrôle par exemple, ou des signaux utilisés en interne pour la navigation) et de brouiller d'autres systèmes. De plus, il importe d'émettre le signal radio sur une fréquence adaptée à l'environnement dans lequel le signal est transmis, c'est-à-dire une carlingue d'avion si le système de synchronisation est utilisé pour synchroniser des capteurs d'avion. La fréquence radio est donc avantageusement choisie de sorte à assurer une propagation optimale de l'onde radio dans l'avion. La bande de fréquences entre 407 et 825 MHz répond à cette contrainte.

Dans un mode de réalisation préféré, la fréquence radio vaut de préférence 460 MHz, ceci en raison de la disponibilité des filtres passe-bas couvrant cette fréquence, lesdits filtres étant utilisés pour fabriquer les moyens de transposition de fréquence de l'unité principale et les moyens de changement de fréquence de l'unité secondaire. De plus, on utilise la fréquence 460 MHz en raison de la disponibilité des antennes couvrant cette fréquence, lesdites antennes étant utilisées au sein des moyens d'envoi de l'unité principale et des moyens de réception de l'unité secondaire.

Dans un mode de réalisation non limitatif, les moyens d'envoi de l'unité principale comportent une antenne présentant un angle d'ouverture compris entre 50 et 70°. En effet, le fuselage de l'avion constitue un guide d'onde ; cette configuration implique l'utilisation d'une antenne directive privilégiant cette géométrie par un gain dans l'axe du fuselage. De plus, le canal de propagation et hors de l'avion présente de nombreux multi-trajets. Une antenne directive tend à limiter ce phénomène en privilégiant une direction de propagation. Cependant, une antenne trop directive limite la dispersion de la puissance sur les parties latérales du fuselage. Ainsi, une antenne présentant un angle d'ouverture compris entre 50 et 70°, par exemple 60°, présente un bon compromis en réponse à ces contraintes.

Dans un mode de réalisation non limitatif, la fréquence GPS est la fréquence L1 du système GPS, valant 1575,42 MHz. En effet, cette fréquence est la seule exploitable par des récepteurs GPS civils.

Dans un mode de réalisation non limitatif, la constellation comporte 4 satellites, la constellation étant de type pyramidal. Dans un autre mode de réalisation non limitatif, la constellation comporte 6 satellites, la constellation étant de type cubique faces centrées. Ces deux configurations font partie des configurations optimales pour obtenir la meilleure synchronisation possible entre l'horloge locale associée au capteur et l'horloge de référence.

L'invention et ses différentes applications seront mieux comprises à la lecture de la description qui suit et à l'examen des figures qui l'accompagnent.

**BREVE DESCRIPTION DES FIGURES**

Les figures ne sont présentées qu'à titre indicatif et nullement limitatif de l'invention. Les figures montrent :

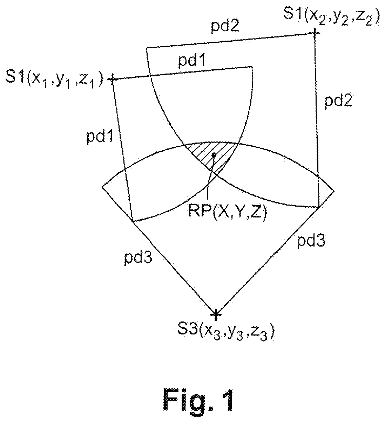

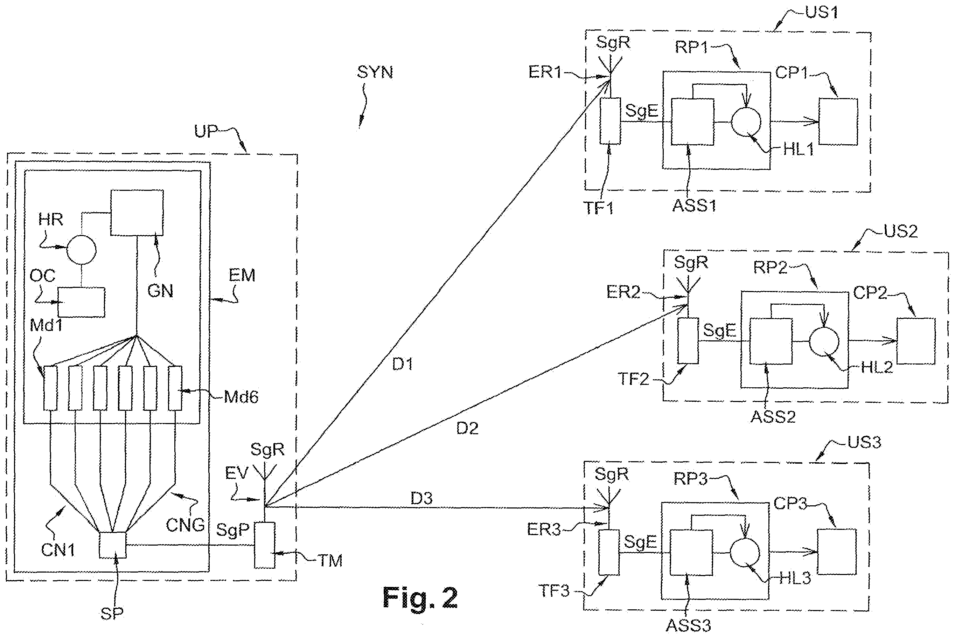

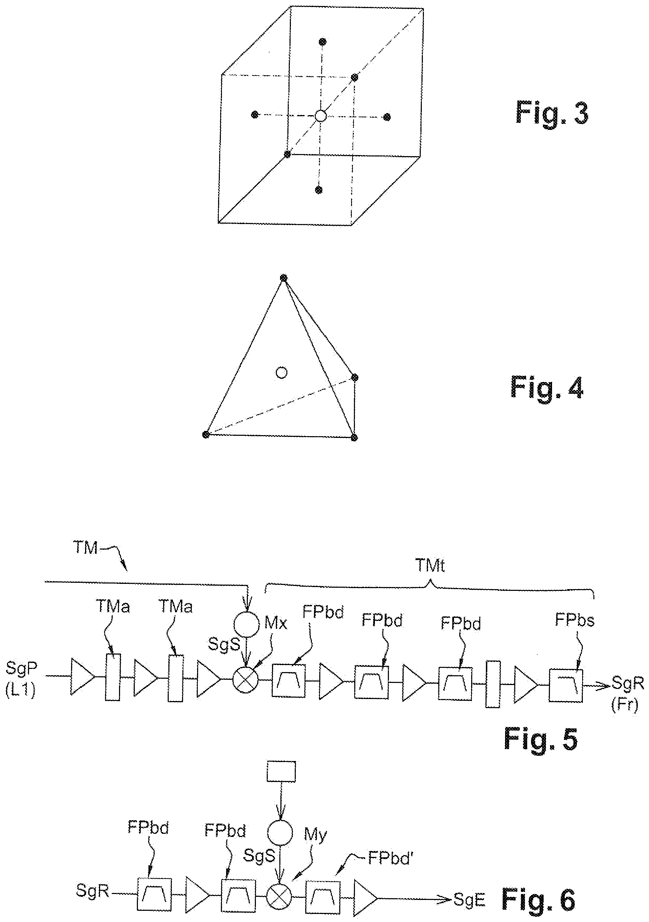

- A la figure 1, un schéma permettant la compréhension du fonctionnement d'un système GPS classique ;
- A la figure 2, une représentation schématique d'un système de synchronisation selon un mode de réalisation non limitatif de l'invention ;
- A la figure 3, une représentation schématique d'une constellation de satellite de type cubique faces centrées ;
- A la figure 4, une représentation schématique d'une constellation de satellites de type pyramidale ;
- A la figure 5, une représentation schématique de moyens de traitements de signaux, appartenant au système de synchronisation ;
- A la figure 6, une représentation schématique de moyens de changement de fréquence, appartenant au système de synchronisation.

**DESCRIPTION DETAILLEE D'AU MOINS UN MODE DE REALISATION DE L'INVENTION**

Sauf précision contraire, un même élément apparaissant sur des figures différentes présente une référence unique.

Pour faciliter la compréhension de l'invention, des concepts de base du système GPS (Global Positioning System) sont rappelés ci-après. Le système GPS est un système de géolocalisation de récepteurs GPS au moyen de signaux GPS provenant de satellites GPS formant une constellation. La constellation comporte plusieurs dizaines de satellites en orbite autour de la Terre, comportant chacun une horloge atomique leur procurant une base temporelle précise, stable, et commune à tous les satellites. Les satellites émettent des signaux GPS sur deux fréquences : une fréquence L1 (1575,42 MHz) et une fréquence L2 (1227,60 MHz). Seule la fréquence L1 est exploitée par les GPS civils. Les signaux GPS destinés à l'usage civil sont codés selon un code C/A (Coarse Acquisition).

Les signaux GPS comportent des messages contenus dans des trames de durée trente secondes. L'instant d'émission de ces messages est calé précisément sur chaque demi-minute de l'horloge atomique des satellites. Ces messages comportent une première partie, une deuxième partie, et une troisième partie. La première partie comporte des informations de synchronisation. Les informations de synchronisation comportent la fréquence de l'horloge atomique, un signal de synchronisation couramment appelé top de synchronisation, et la date précise de l'émission du top de synchronisation. La deuxième partie comporte une éphéméride, c'est-à-dire des informations sur l'orbite suivie par le satellite émettant le message. La troisième partie comporte un almanach, c'est-à-dire des informations sur les orbites suivies par l'ensemble des satellites de la constellation.

En résolvant un système d'équations à partir de ces trois parties de messages, un récepteur GPS, nommé RP, recevant au moins quatre signaux GPS provenant d'au moins quatre satellites S1-S4, est capable de calculer ses coordonnées géographiques (X, Y, Z), de la manière expliquée ci-dessous.

Puisque tous les signaux reçus par le récepteur RP sont à la même fréquence, le récepteur RP démodule et sépare tout d'abord les signaux émis par les différents satellites S1-S4. Le récepteur RP décode ensuite chaque signal provenant de chaque satellite Si, pour en extraire :

- les informations de synchronisation, dont les instants d'émissions des tops de synchronisation, et
- les coordonnées $(x_i, y_i, z_i)$ du satellite Si.

Le récepteur RP dispose alors d'au moins quatre jeux de données, chaque jeu de données comportant les coordonnées spatiales $(x_i, y_i, z_i)$ d'un satellite Si, et l'instant d'émission $t_i$ du top de synchronisation compris dans le signal envoyé par le satellite Si.

Par ailleurs, le récepteur RP comporte une horloge locale lui permettant de déterminer le temps de réception tr du top de synchronisation. Par comparaison du temps de réception tr et du temps d'émission ti du top de synchronisation, le récepteur RP détermine la durée de transmission du message. Il en déduit alors sa distance au satellite Si, soit c.(tr-ti), où c représente la vitesse de propagation du signal, assimilée à la vitesse de propagation de la lumière dans le vide.

Cependant, l'horloge locale du récepteur RP n'est en pratique jamais parfaitement synchronisée à celle des satellites S1-S4. La distance calculée n'est donc pas exacte, et peut être appelée pour cette raison pseudo-distance pdi. Ainsi : pdi=c.(tr-ti)=c.(Di+∆t), où Di est la durée de propagation du signal entre le satellite Si et le récepteur GPS, et ∆t est le décalage d'horloge entre l'horloge atomique du satellite Si et l'horloge locale du récepteur GPS RP.

La figure 1 illustre cette problématique. Dans le cas illustré, l'horloge locale du récepteur RP est en avance par rapport aux horloges atomiques des satellites S1-S3, ce qui se traduit par une exagération des pseudo-distances pdi par rapport aux distances réelles. Il existe donc une zone d'incertitude quant à la position du récepteur RP, les sphères centrées sur les satellites S1, S2 et S3 et de rayons respectifs pd1, pd2 et pd3 ne coïncidant pas en un point. Pour déterminer précisément ses coordonnées spatiales (X, Y, Z), le récepteur RP doit donc résoudre le système d'équations suivant, pour i allant de 1 à 4 :

$$\text{pdi} = \sqrt{(X - xi)^2 + (Y - yi)^2 + (Z - zi)^2} - \Delta t.\,c$$

Les composantes (X, Y, Z, ∆t) sont alors calculées par la méthode des moindres carrés.

De plus, le décalage d'horloge ∆t calculé et la fréquence de l'horloge atomique transmise dans les informations de synchronisation des premières parties des messages GPS, permettent au récepteur GPS de synchroniser son horloge locale sur les horloges atomiques des satellites GPS.

La figure 2 représente schématiquement un système de synchronisation SYN selon un mode de réalisation non limitatif de l'invention, utilisé pour synchroniser des capteurs d'un avion d'essai. Le système de synchronisation SYN comporte :

- une unité principale UP
- trois unités secondaires US1, US2, US3, respectivement placées à des distances D1, D2, D3 de l'unité principale UP. On note que le nombre d'unités secondaires diffère selon d'autres modes de réalisation. Avantageusement, le système de synchronisation comporte autant d'unités secondaires que de capteurs à synchroniser au moyen du système de synchronisation.

L'unité principale UP comporte :

- un émulateur EM d'une constellation artificielle de satellites GPS ayant pour base temporelle une horloge de référence HR. Dans le mode de réalisation illustré, l'horloge de référence HR est une horloge propre à l'émulateur EM, cadencée par un oscillateur OC à haute stabilité de type oscillateur à quart thermostaté (OCXO, Oven Controlled X-tal OScillator). Cependant, dans d'autres modes de réalisation, l'horloge de référence est externe à l'émulateur EM ; il s'agit par exemple d'une horloge de l'avion utilisée pour d'autres applications, et branchée à l'émulateur EM. L'émulateur EM est apte à délivrer des signaux qui seraient ceux reçus par un récepteur GPS captant les signaux GPS de la constellation si ladite constellation était réelle. Les signaux délivrés par l'émulateur EM comportent donc des messages en trois parties tel que détaillé ci-avant. Lesdits messages comportent des informations sur les coordonnées des satellites de la constellation artificielle et des informations de synchronisation avec l'horloge de référence HR.
- des moyens de traitement TM de signaux, connectés à une sortie de l'émulateur EM, adaptés pour traiter les signaux délivrés par l'émulateur EM.
- des moyens d'envoi EV de signaux, connectés à une sortie des moyens de traitement TM, adaptés pour envoyer les signaux délivrés par les moyens de traitement TM.

L'émulateur EM comprend :

- six canaux CN1-CN6, chacun associé à un satellite de la constellation artificielle. On note que le nombre de canaux diffère selon d'autres modes de réalisation. On note également que, dans d'autres modes de réalisation, l'émulateur comporte des canaux non associés à des satellites de la constellation, par exemple dans le cas où l'émulateur comporte six canaux et que la constellation à émuler ne comporte que quatre satellites. La seule contrainte relative au nombre de canaux est que chaque satellite de la constellation à émuler puisse être associé à un canal différent.

Chaque canal CNi comporte des moyens Mdi pour simuler un temps de propagation d'un signal GPS se propageant depuis le satellite associé au canal jusqu'à un récepteur GPS qui serait branché en sortie de l'émulateur EM.

- des moyens de génération GN de signaux aptes à générer, sur chaque canal CNi, des signaux simulant des émissions du satellite associé au canal CNi. Comme cela a été détaillé précédemment, les signaux sont émis sur la fréquence GPS L1, sont codés selon le C/A code, et comportent des informations de synchronisation avec l'horloge de référence HR.
- des moyens de superposition SP de signaux, aptes à superposer les signaux générés sur les canaux CN1-CN6 de l'émulateur EM, de sorte à produire un signal principal SgP simulant l'ensemble des émissions de la constellation.

On note que dans un mode de réalisation préféré, les satellites artificiels sont disposés selon une constellation artificielle de type cubique face centrées, tel que représenté à la figure 3, les six points grisés représentant le positionnement des six satellites. On note que dans un mode de réalisation où la constellation artificielle ne comporte que quatre satellites, cette constellation est avantageusement de forme pyramidale, tel que représenté à la figure 4. Ces configurations permettent des synchronisations optimales.

Les moyens de traitement TM sont aptes à délivrer un signal radio SgR à partir du signal principal SgP. La figure 5 montre un mode de réalisation des moyens de traitement TM, mais une multitude d'autres montages pourrait être utilisée pour réaliser les moyens de traitement.

Dans le mode de réalisation illustré à la figure 5, les moyens de traitement TM comportent :

- des moyens d'amplification TMa aptes à amplifier le signal principal SgP
- des moyens de transposition TMt de fréquence aptes à transposer la fréquence GPS L1 du signal principal SgP vers une fréquence radio Fr. Les moyens de transposition TMt comportent un mélangeur Mx suivi de trois filtres passe-bande FPbs et un filtre passe-bas FPbd. Les filtres passe-bande FPbd sont utilisés pour filtrer les raies parasites résultant du mélange entre le signal principal SgP et un signal secondaire SgS. Le filtre passe-bas FPbs apporte un complément de réjection des raies parasites.

Dans le mode de réalisation préféré, la fréquence radio Fr du signal radio SgR vaut 460 MHz. Cette fréquence Fr appartient en effet à une bande de fréquences non utilisées dans l'avion. De plus, des filtres passe-bas FPbs à 470 MHZ et passe-bande FPbd 450-470 MHz utilisés pour fabriquer les moyens de transposition TMt sont facilement procurables. Toutefois, utiliser une autre fréquence radio Fr est possible, tant qu'il ne s'agit pas d'une fréquence utilisée dans l'avion.

Les moyens d'envoi EV du signal radio SgR comportent une antenne émettant à la fréquence radio Fr. Dans un mode de réalisation préféré, l'antenne présente un angle d'ouverture à -3dB valant 60° en azimut et en site, et un gain de 7dB dans l'axe du lobe principal. Des essais ont montré que cette antenne était la plus adéquate pour la couverture radio intérieure à l'avion. Le niveau d'émission doit respecter à la fois les normes applicables et les recommandations propres à l'utilisation dans l'avion d'essai. Ce niveau dépend du choix de la fréquence radio Fr. Avantageusement, le niveau d'émission correspond à la puissance la plus faible garantissant le bon fonctionnement du système de synchronisation SYN.

Chaque unité secondaire USj comprend :

- des moyens de réception ERj du signal radio SgR, comportant une antenne adaptée pour capter les signaux radio SgR à la fréquence radio Fr provenant des moyens d'envoi EV de l'unité principale UP. Chacun des moyens de réception ERj des unités secondaires US1-US3 reçoit exactement le même signal radio SgR, mais à des instants différents à cause des temps de propagation différents entre l'unité principale UP et les unités secondaires US1-US3 placées à des distances Dj différentes.
- des moyens de changement de fréquence TFj connectés aux moyens de réception ERj, adaptés pour changer la fréquence des signaux radio SgR reçus par les moyens de réception ERj
- un récepteur RPj comportant une puce GPS, connecté à une sortie des moyens de changement de fréquence TFj, adapté pour recevoir et traiter les signaux délivrés par les moyens de changement de fréquence TFj
- un capteur CP1 relié au récepteur GPS RPj, adapté pour dater ses mesures selon une base de temps fournie par le récepteur RPj.

Les moyens de changement de fréquence TFj sont aptes à transposer la fréquence radio Fr du signal radio SgR reçu par les moyens de réception ERj, vers la fréquence GPS L1, de sorte à délivrer un signal exploitable SgE par le récepteur GPS. La figure 6 montre un mode de réalisation des moyens de changement de fréquence TFj, mais une multitude d'autres montages pourrait être utilisée pour réaliser les moyens de changement de fréquence. Dans le mode de réalisation illustré à la figure 6, les moyens de changement de fréquence TFj comportent deux filtres passe-bande FPbd identiques à ceux utilisés dans les moyens de transposition de fréquence TMt, suivis d'un mélangeur My avec le signal secondaire SgS, et enfin un filtre passe-bande FPbd' à la fréquence L1. Les deux premiers filtres passe-bande FPbd permettent de supprimer les signaux indésirables générés éventuellement par d'autres équipements embarqués dans l'avion. Le filtrage en sortie du mélangeur My est assuré par le filtre passe-bande FPbd' qui apporte un complément à la réjection assurée par le filtrage d'entrée du récepteur RPj connecté en aval.

Le récepteur RPj comporte :

- une horloge locale HLj
- des moyens d'asservissement ASSj de l'horloge locale HLj.

Les moyens d'asservissement ASSj sont aptes à décoder le signal exploitable SgE, pour en extraire les informations de synchronisation et les coordonnées des satellites de la constellation artificielle. De plus, les moyens d'asservissement ASSj sont aptes à calculer le retard de l'horloge locale HLj par rapport à l'horloge de référence HR au moyen des informations comprises dans le signal décodé, et de la distance Dj entre l'unité principale UP et l'unité secondaire USj.

Pour cela, le récepteur RPj résout le système d'équations suivant, pour i allant de 1 à 6, l'indice i étant relatif au satellite d'indice i de la constellation artificielle, l'indice j étant relatif au récepteur RPj d'indice j parmi les différents récepteurs GPS des unités secondaires US1-US3 :

$$\text{pdi, j} = \sqrt{(Xj - xi)^2 + (Yj - yi)^2 + (Zj - zi)^2} - \Delta tj.c - Dj$$

où :

- pdi,j est la pseudo-distance entre le satellite d'indice i et le récepteur RPj d'indice j
- (xi, yi, zi) sont les coordonnées spatiales du satellite d'indice i
- (Xj, Yj, Zj) sont les coordonnées spatiales du récepteur RPj d'indice j
- $\Delta$tj est le décalage d'horloge entre l'horloge de référence HR et l'horloge interne du récepteur RPj d'indice j
- Dj est la distance entre le récepteur RPj d'indice j et l'unité principale
- et c représente la vitesse de la lumière dans le vide.

Du système d'équation, le récepteur RPj détermine le retard $\Delta$tj de l'horloge locale HLj par rapport à l'horloge de référence HR. A partir du retard d'horloge $\Delta$tj et de la fréquence de l'horloge atomique transmise dans les informations de synchronisation, le récepteur RPj est apte à synchroniser son horloge locale HLj sur l'horloge de référence HR.

Enfin, le capteur CPj est apte à dater les mesures qu'il réalise dans le référentiel de l'horloge locale HL1 du récepteur RP1, elle-même synchronisée sur l'horloge de référence HR. Ainsi, les mesures du capteur CPj sont datés relativement à l'horloge de référence HR.

**Revendications**

1. Système de synchronisation (SYN) pour dater des mesures d'un capteur (CPi) relativement à une horloge de référence (HR), **caractérisé en ce qu'**il comporte:

   - une unité principale (UP) comprenant :

     ◦ un émulateur (EM) d'une constellation artificielle de satellites GPS ayant pour base temporelle une horloge de référence (HR), l'émulateur (EM) comprenant des moyens de génération (GN, CN1-CN6, SP) pour générer un signal principal (SgP) sur une fréquence GPS, simulant l'ensemble des émissions de la constellation
     ◦ des moyens de traitement (TM) aptes à délivrer un signal radio (SgR) à partir du signal principal (SgP), les moyens de traitement (TM) comprenant des moyens de transposition de fréquence (TMt) aptes à transposer la fréquence GPS du signal principal (SgP) vers une fréquence radio (Fr)
     ◦ des moyens d'envoi (EV) du signal radio (SgR)

   - une unité secondaire (USi) positionnée à une distance (Di) de l'unité principale (UP), comprenant :

     ◦ des moyens de réception (ERi) du signal radio (SgR)

    ◦ des moyens de changement de fréquence (TFi) aptes à transposer la fréquence radio (Fr) du signal radio (SgR) vers la fréquence GPS, de sorte à délivrer un signal exploitable (SgE) par un récepteur GPS
    ◦ un récepteur GPS (RPi) comprenant :

        une horloge locale (HLi)
        des moyens d'asservissements (ASSi) aptes à décoder le signal exploitable (SgE) et à synchroniser l'horloge locale (HLi) sur l'horloge de référence (HR) au moyen desdites informations décodées et de la distance (Di)

    ◦ un capteur (CPi) relié au récepteur (RPi), apte à réaliser des mesures et dater lesdites mesures relativement à l'horloge locale (HLi) du récepteur (RPi).

**2.** Système de synchronisation (SYN) selon la revendication précédente, dans lequel les moyens de génération (GN, CN1-CN6, SP) de l'émulateur (EM) comportent :

    - une pluralité de canaux (CN1-CN6), chacun associé à un satellite de la constellation
    - des moyens de génération (GN) de signaux aptes à générer, sur chaque canal (CNi), des signaux simulant des émissions du satellite associé au canal (CNi), les signaux étant émis sur la fréquence GPS
    - des moyens de superposition de signaux (SP), aptes à superposer les signaux générés sur les canaux (CN1-CN6) de l'émulateur (EM), de sorte à produire un signal principal (SgP).

**3.** Système de synchronisation (SYN) selon l'une des revendications précédentes, comportant des moyens d'estimation de distance aptes à estimer la distance (Di) entre l'unité principale (UP) et l'unité secondaire (USi), et à fournir ladite distance (Di) au récepteur (RPi).

**4.** Système de synchronisation (SYN) selon l'une des revendications précédentes, dans lequel les moyens de traitement (TM) comportent des moyens d'amplification (TMa) aptes à amplifier le signal principal (SgP).

**5.** Système de synchronisation (SYN) selon l'une des revendications précédentes, dans lequel la fréquence radio (Fr) est comprise entre 407 et 825 MHz, et vaut de préférence 460 MHz.

**6.** Système de synchronisation (SYN) selon l'une des revendications précédentes, dans lequel les moyens d'envoi (EV) de l'unité principale (UP) comportent une antenne présentant un angle d'ouverture compris entre 50 et 70° et valant de préférence 60°.

**7.** Système de synchronisation (SYN) selon l'une des revendications précédentes, dans lequel la fréquence GPS est la fréquence L1 du système GPS, valant 1575,42 MHz.

**8.** Système de synchronisation (SYN) selon l'une des revendications précédentes, dans lequel la constellation comporte 4 satellites, la constellation étant de type pyramidal.

**9.** Système de synchronisation (SYN) selon l'une des revendications 1 à 7, dans lequel la constellation comporte 6 satellites, la constellation étant de type cubique faces centrées.

**10.** Procédé de synchronisation (MET) pour dater des mesures d'un capteur (CPi) relativement à une horloge de référence (HR), ledit procédé étant **caractérisé en ce qu'**il comporte les étapes suivantes :

    - réalisées par une unité principale (UP) d'un système de synchronisation (SYN) :

        ◦ une étape de génération d'un signal principal (SgP) sur une fréquence GPS, le signal principal (SgP) simulant l'ensemble des émissions d'une constellation artificielle de satellites GPS ayant pour base temporelle une horloge de référence (HR)
        ◦ Une étape de traitement du signal principal (SgP) pour délivrer un signal radio (SgR), comprenant une sous-étape de transposition de la fréquence GPS du signal principal (SgP) vers une fréquence radio (Fr)
        ◦ Une étape d'envoi du signal radio (SgR),

    - réalisées par une unité secondaire (USi) du système de synchronisation (SYN), positionnée à une distance (Di) de l'unité principale (UP), et comportant un capteur (CPi) :

◦ une étape de réception du signal radio (SgR)
◦ une étape de changement de fréquence pour transposer la fréquence radio (Fr) du signal radio (SgR) vers la fréquence GPS, de sorte à délivrer un signal exploitable (SgE) par un récepteur GPS
◦ une étape d'asservissement, comprenant :

une sous-étape de décodage du signal exploitable (SgE)
une sous-étape de synchronisation d'une horloge locale (HLi) d'un récepteur GPS (RPi) sur l'horloge de référence (HR), au moyen des informations décodées et de la distance (Di)

◦ une étape de réalisation de mesures par le capteur (Cpi)
◦ une étape de datation desdites mesures relativement à l'horloge locale (HLi).

**Patentansprüche**

1. Synchronisationssystem (SYN) zum Datieren der Messungen eines Sensors (CPi) in Bezug auf eine Referenzzeituhr (HR), **dadurch gekennzeichnet, dass** es umfasst:

- eine Haupteinheit (UP), umfassend:

◦ einen Emulator (EM) einer künstlichen Satellitenkonstellation GPS, die als zeitliche Grundlage eine Referenz-Zeituhr (HR) aufweist, wobei der Emulator (EM) Erzeugungsmittel (GN, CN1-CN6, SP) zum Erzeugen eines Hauptsignals (SgP) in einer Frequenz GPS umfasst, die alle Sendungen der Konstellation simuliert
◦ Verarbeitungsmittel (TM), die geeignet sind, um ein Funksignal (SgR) ausgehend von dem Hauptsignal (SgP) auszugeben, wobei die Verarbeitungsmittel (TM) Frequenz-Umsetzungsmittel (TMt) umfassen, die geeignet sind, um die Frequenz GPS des Hauptsignals (SgP) in eine Funkfrequenz (Fr) umzusetzen;
◦ Versandmittel (EV) des Funksignals (SgR)

- eine sekundäre Einheit (USi), die in einer Entfernung (Di) von der Haupteinheit (UP) positioniert ist, umfassend:

◦ Empfangsmittel (Eri) des Funksignals (SgR);
◦ Frequenz-Änderungsmittel (TFi), die zum Umsetzen der Funkfrequenz (Fr) des Funksignals (SgR) zur Frequenz GPS derart geeignet sind, dass ein von einem Empfänger GPS auswertbares Signal (SgE) ausgegeben wird
◦ einen Empfänger GPS (RPi), umfassend:

eine örtliche Zeituhr (HLi)
Regelungsmittel (ASSi), die geeignet sind, um das auswertbare Signal (SgE) zu entschlüsseln und die örtliche Zeituhr (HLi) mit der Referenz-Zeituhr (HR) mittels der genannten entschlüsselten Informationen und der Entfernung (Di) zu synchronisieren

◦ einen mit dem Empfänger (RPi) verbundenen Sensor (CPi), der geeignet ist, um Messungen vorzunehmen und die genannten Messungen in Bezug auf die örtliche Zeituhr (HLi) des Empfängers (RPi) zu datieren.

2. Synchronisationssystem (SYN) gemäß dem voranstehenden Anspruch, bei dem die Erzeugungsmittel (GN, CN1-CN6, SP) des Emulators (EM) umfassen:

- eine Vielzahl von Kanälen (CN1-CN6), von denen jeder einem Satelliten der Konstellation zugeordnet ist
- Erzeugungsmittel (GN) von Signalen, die geeignet sind, um auf jedem Kanal (CNi) Signale zu erzeugen, die Emissionen des dem Kanal (CNi) zugeordnete Satelliten zu erzeugen, wobei die Signale in der Frequenz GPS ausgegeben sind
- Signal-Überlagerungsmittel (SP), die geeignet sind, die Signale zu überlagern, die auf den Kanälen (CN1-CN6) des Emulators (EM) erzeugt sind, derart, dass ein Hauptsignal (SgP) produziert wird.

3. Synchronisationssystem (SYN) gemäß einem der voranstehenden Ansprüche, umfassend Entfernungs-Schätzmittel, die geeignet sind, die Entfernung (Di) zwischen der Haupteinheit (UP) und der sekundären Einheit (USi) zu schätzen und die genannte Entfernung (Di) dem Empfänger (RPi) zu liefern.

4. Synchronisationssystem (SYN) gemäß einem der voranstehenden Ansprüche, bei dem die Verarbeitungsmittel (TM) Verstärkungsmittel (TMa) umfassen, die geeignet sind, das Hauptsignal (SgP) zu verstärken.

5. Synchronisationssystem (SYN) gemäß einem der voranstehenden Ansprüche, bei dem die Funkfrequenz (Fr) zwischen 407 und 825 MHz inbegriffen ist und bevorzugt 460 MHz beträgt.

6. Synchronisationssystem (SYN) gemäß einem der voranstehenden Ansprüche, bei dem die Versandmittel (EV) der Haupteinheit (UP) eine Antenne umfassen, die einen zwischen 50 und 70° inbegriffenen Öffnungswinkel aufweist und bevorzugt 60° beträgt.

7. Synchronisationssystem (SYN) gemäß einem der voranstehenden Ansprüche, bei dem die Frequenz GPS die Frequenz L1 des Systems GPS ist, die 1575,42 MHz beträgt.

8. Synchronisationssystem (SYN) gemäß einem der voranstehenden Ansprüche, bei dem die Konstellation 4 Satelliten umfasst, wobei die Konstellation vom pyramidenartigen Typ ist.

9. Synchronisationssystem (SYN) gemäß einem der Ansprüche 1 bis 7, bei dem die Konstellation 6 Satelliten umfasst, wobei die Konstellation vom kubischen Typ mit zentrierten Seiten ist.

10. Synchronisationsverfahren (MET) zum Datieren der Messungen eines Sensors (CPi) in Bezug auf eine Referenz-Zeituhr (HR), wobei das genannte Verfahren **dadurch gekennzeichnet ist, dass** es die folgenden Schritte umfasst:

- Durchgeführt von einer Haupteinheit (UP) eines Synchronisationssystems (SYN):

  ◦ einen Erzeugungsschritt eines Hauptsignals (SgP) in einer Frequenz GPS, wobei das Hauptsignal (SgP) alle Sendungen einer künstlichen Satellitenkonstellation GPS simuliert, die eine Referenz-Zeituhr (HR) als zeitliche Grundlage aufweisen
  ◦ einen Verarbeitungsschritt des Hauptsignals (SgP) zum Ausgeben eines Funksignals (SgR), umfassend einen Umsetzungs-Teilschritt der Frequenz GPS des Hauptsignals (SgP) in eine Funkfrequenz (Fr),
  ◦ einen Versandschritt des Funksignals (SgR),

- durchgeführt durch eine sekundäre Einheit (USi) des Synchronisationssystems (SYN), die in einer Entfernung (Di) der Haupteinheit (UP) positioniert ist und einen Sensor (CPI) umfasst:

  ◦ einen Empfangsschritt des Funksignals (SgR)
  ◦ einen Frequenz-Änderungsschritt zum Umsetzen der Funkfrequenz (Fr) des Funksignals (SgR) in die Frequenz GPS derart, dass ein von einem Empfänger GPS auswertbares Signal (SgE) ausgegeben wird
  ◦ einen Regelungsschritt, umfassend:

    einen Entschlüsselungs-Teilschritt des auswertbaren Signals (SgE)
    einen Synchronisations-Teilschritt einer örtlichen Zeituhr (HLi) eines Empfängers GPS (RPi) auf der Referenz-Zeituhr (HR) mittels entschlüsselter Informationen und der Entfernung (Di)

  ◦ einen Ausführungsschritt von Messungen durch den Sensor (Cpi)
  ◦ einen Datierungsschritt der genannten Messungen in Bezug auf die örtliche Zeituhr (HLi).

**Claims**

1. Synchronisation system (SYN) for dating measurements from a sensor (CPi) relative to a reference clock (HR), **characterised in that** it comprises:

- a main unit (UP) comprising:

  ◦ an emulator (EM) for emulating an artificial GPS satellite constellation having a time base based on a reference clock (HR), the emulator (EM) comprising means for generating (GN, CN1-CN6, SP) for generating a main signal (SgP) on a GPS frequency, simulating all of the emissions of the constellation
  ◦ processing means (TM) capable of delivering a radio signal (SgR) from the main signal (SgP), the processing means (TM) comprising frequency conversion means (TMt) able to convert the GPS frequency of the main signal (SgP) to a radio frequency (Fr)
∘ means for transmitting (EV) the radio signal (SgR)

- a secondary unit (USi) positioned at a distance (Di) from the main unit (UP), comprising:

∘ means for receiving (ERi) the radio signal (SgR)
∘ frequency changing means (TFi) able to convert the radio frequency (Fr) of the radio signal (SgR) to the GPS frequency, in such a way as to deliver a signal that can be used (SgE) by a GPS receiver
∘ a GPS receiver (RPi) comprising:

a local clock (HLi)
slaving means (ASSi) capable of decoding the usable signal (SgE) and of synchronising the local clock (HLi) with the reference clock (HR) by means of said decoded information and the distance (Di)

∘ a sensor (CPi) connected to the receiver (RPi), capable of taking measurements and of dating said measurements relative to the local clock (HLi) of the receiver (RPi).

2. Synchronisation system (SYN) according to the preceding claim, wherein the means for generating (GN, CN1-CN6, SP) of the emulator (EM) comprise:

- a plurality of channels (CN1-CN6), each one associated with a satellite of the constellation
- means for generating (GN) signals capable of generating, on each channel (CNi), signals simulating emissions of the satellite associated with the channel (CNi), with the signals being emitted on the GPS frequency
- means for superposing signals (SP), capable of superposing the signals generated on the channels (CN1-CN6) of the emulator (EM), in such a way as to produce a main signal (SgP).

3. Synchronisation system (SYN) according to one of the preceding claims, comprising means for estimating distance capable of estimating the distance (Di) between the main unit (UP) and the secondary unit (USi), and in supplying said distance (Di) to the receiver (RPi).

4. Synchronisation system (SYN) according to one of the preceding claims, wherein the processing means (TM) comprise means for amplifying (TMa) capable of amplifying the main signal (SgP).

5. Synchronisation system (SYN) according to one of the preceding claims, wherein the radio frequency (Fr) is between 407 and 825 MHz, and is preferably 460 MHz.

6. Synchronisation system (SYN) according to one of the preceding claims, wherein the means for transmitting (EV) of the main unit (UP) comprise an antenna that has an aperture angle between 50 and 70° and preferably of 60°.

7. Synchronisation system (SYN) according to one of the preceding claims, wherein the GPS frequency is the frequency L1 of the GPS system, and is 1575.42 MHz.

8. Synchronisation system (SYN) according to one of the preceding claims, wherein the constellation comprises 4 satellites, the constellation being of the pyramidal type.

9. Synchronisation system (SYN) according to one of claims 1 to 7, wherein the constellation comprises 6 satellites, the constellation being of the face centred cubic type.

10. Method of synchronisation (MET) for dating measurements from a sensor (CPi) relative to a reference clock (HR), said method being **characterised in that** it comprises the following steps:

- carried out by a main unit (UP) of a synchronisation system (SYN):

∘ a step of generating a main signal (SgP) on a GPS frequency, the main signal (SgP) simulating all of the emissions of an artificial constellation of GPS satellites having a time base based on a reference clock (HR)
∘ A step of processing the main signal (SgP) in order to deliver a radio signal (SgR), comprising a sub-step of converting the GPS frequency from the main signal (SgP) to a radio frequency (Fr)

　　　◦ A step of transmitting the radio signal (SgR),

- carried out by a secondary unit (USi) of the synchronisation system (SYN), positioned at a distance (Di) from the main unit (UP), and comprising a sensor (CPi):

　　　◦ a step of receiving the radio signal (SgR)
　　　◦ a frequency changing step for converting the radio frequency (Fr) of the radio signal (SgR) to the GPS frequency, in such a way as to deliver a signal that can be used (SgE) by a GPS receiver
　　　◦ a step of slaving, comprising:

　　　　　　a sub-step of decoding the usable signal (SgE)
　　　　　　a sub-step of synchronising a local clock (HLi) of a GPS receiver (RPi) with the reference clock (HR), by means of the decoded information and of the distance (Di)

　　　◦ a step of taking measurements by the sensor (Cpi)
　　　◦ a step of dating said measurements relative to the local clock (HLi).

Fig. 1

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2012020445 A

**Littérature non-brevet citée dans la description**

• **STEVEN W ARMS.** *Flight Testing of Wireless Sensing Networks for Rotorcraft Structural Health and Usage Management Systems*